# EUROPEAN PATENT APPLICATION

(11) **EP 4 714 684 A1**
(43) Date of publication of application: **25.03.2026**
(21) Application number: 25197165.1
(22) Date of filing: 20.08.2025
(51) Int. Cl.: B60C 17/06, B60C 17/00

(54) **RUN-FLAT DEVICE**

(30) Priority: 24.09.2024 TW 113136185
(71) Applicant: Sichuan Hertz Technology and Culture Group Co., Ltd., Chengdu, Sichuan 610041 (CN)
(72) Inventor: HSU, SHUI-CHEN, 260 Yilan City, Yilan County (TW)
(74) Representative: Cabinet Chaillot

(57) **Abstract**

A run-flat device (100) includes several support units (10) fixed in an annular arrangement. Each of the support units (10) has a main wall (12). A side of each of the main walls (12) is connected to a hook portion (14) which a retaining ring (20) fits around. Another side of each of the main walls (12) is connected to an outer wall (16), a middle wall (11), and an inner wall (18). A blocking wall (13) is connected between each of the outer walls (16) and each of the inner walls (18). A steel cable through hole (15) and an elastic ring through hole (17) are separated by each of the middle walls (11). A steel cable ring (30) passes through the steel cable through holes (15). Each of the blocking walls (13) forms an inlet (131). An elastic ring (40) fits in the elastic ring through holes (17).

## Description

### BACKGROUND OF THE INVENTION

### Technical Field

The present invention relates generally to a tire safety device, and more particularly to a run-flat device installed in a tire and adapted to support a tread of the tire.

### Description of Related Art

When a tire of a vehicle is punctured by sharp objects, is defective, or is damaged by an external force in the environment during the vehicle moving on the road, a gap is formed on the tire and the tire is deflated through the gap, so that the tire could not stay fully inflated. At that time, because a tread of the tire is dented, a diameter of the tire decreases, so that the tire could not normally roll and even causes the vehicle to be out of control and damaging a rim of the tire.

To solve the problem that the deflated tire causes the vehicle out of control, a tire sidewall with an enhanced robustness is invented. Through the deflated tire having a supporting force to some degree, the tire could continue rolling, so that the vehicle could continue moving. Although the tire has the advantage that the deflated tire having the tire sidewall with the enhanced robustness could continue rolling, a price of the tire is high and a hard body of the tire causes a poor comfort. Therefore, the requirement of replacing the tire still exists in the market.

### BRIEF SUMMARY OF THE INVENTION

In view of the above, the primary objective of the present invention is to provide a device, which could be installed in a tire and could support a tread of the tire during the tire damaged and deflated, so that the tire could continue rolling to avoid a vehicle installed with the tire out of control.

The present invention provides a run-flat device including a plurality of support units, a retaining ring, a steel cable ring, and an elastic ring, wherein the support units are arranged around a rotation axis in an annular shape. Two opposite directions along the rotation axis are respectively defined as a first direction and a second direction. Each of the support units has a main wall, wherein a side of each of the main walls away from the rotation axis is connected to a hook portion. Each of the hook portions extends in the first direction and has a free end. Each of the hook portions has a retaining ring groove adjacent to each of the free ends. The side of each of the main walls away from the rotation axis is connected to an outer wall. A side of each of the main walls adjacent to the rotation axis is connected to an inner wall. Each of the main walls is connected to a middle wall located between the side of each of the main walls away from the rotation axis and the side of each of the main walls adjacent to the rotation axis. Each of the outer walls, each of the inner walls, and each of the middle walls respectively extend in the second direction. A blocking wall is connected between each of the outer walls and each of the inner walls. A support surface is formed on each of the main walls and each of the outer walls. A steel cable through hole is formed among each of the main walls, each of the inner walls, each of the middle walls, and each of the blocking walls. An elastic ring through hole is formed among each of the main walls, each of the outer walls, each of the middle walls, and each of the blocking walls. An inlet is formed on each of the blocking walls corresponding to each of the elastic ring through holes. A length of each of the inlets perpendicular to the rotation axis is less than a length of each of the elastic ring through holes perpendicular to the rotation axis. The retaining ring fixes the support units around the rotation axis in the annular shape. The retaining ring is an elastomer and tightly fits in the retaining ring grooves of the support units. The steel cable ring fixes the support units around the rotation axis in the annular shape. The steel cable ring passes through the steel cable through holes of the support units. The elastic ring fixes the support units around the rotation axis in the annular shape. The elastic ring passes through the elastic ring through holes of the support units and fits in the elastic ring through holes of the support units. The elastic ring is an elastomer. The elastic ring passes through the inlets of the support units after the elastic ring is compressed by an external force to be deformed.

When the run-flat device of the present invention is used, the hook portions of the support units are hooked on a convex ring formed on an inner side of a tire sidewall of the tire corresponding to the main walls, so that the run-flat device is fixed on the inner side of the tire sidewall of the tire. At that time, a space with a length to some degree is formed between the support surface of each of the support units of the run-flat device and the tread of the tire. Therefore, when the tread runs over an object and then is temporarily deformed during the tire normally used, the tread would not be in contact with the run-flat device.

With the aforementioned design, through the support units fixed by the retaining ring, the steel cable ring, and the elastic ring and arranged in the annular shape, and every two of the support units abutting, the support surfaces of the support units fixed on the inner side of the tire sidewall could support the tread when the tire is flat and then the tread is dented inwards. Therefore, the tire could maintain a fixed shape and continue rolling to avoid the vehicle out of control. In addition, through the run-flat device providing a supporting force to the deflated tire, the vehicle could safely move to the roadside and stop at the roadside to wait for help, or the vehicle could safely move to a repair shop.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of the run-flat device according to an embodiment of the present invention;
FIG. 1A is an enlarged view of a marked region 1A in FIG. 1;
FIG. 2 is a perspective view of the run-flat device seen from another direction according to the embodiment of the present invention;
FIG. 2A is an enlarged view of a marked region 2A in FIG. 2;
FIG. 3 is a perspective view of the support unit according to the embodiment of the present invention;
FIG. 4 is a perspective view of the support unit seen from another direction according to the embodiment of the present invention;
FIG. 5 is an exploded view of the run-flat device according to the embodiment of the present invention;

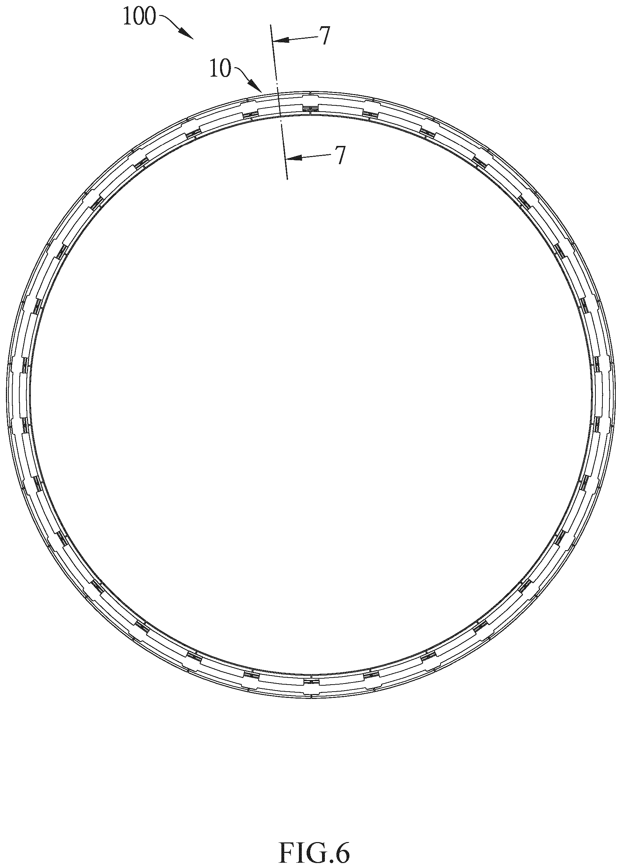

FIG. 6 is a side view of the run-flat device according to the embodiment of the present invention;
FIG. 7 is a sectional view along the 7-7 line in FIG. 6;
FIG. 8 is a perspective view of the steel cable ring according to the embodiment of the present invention;
FIG. 8A is an enlarged view of a marked region 8A in FIG. 8;
FIG. 8B is an exploded view, showing two positioning bolts detached in FIG. 8A;
FIG. 9 is an exploded view, showing two of the support units adjacent according to the embodiment of the present invention;
FIG. 10 is a schematic view, showing two of the support units adjacent in FIG. 9; and
FIG. 11 is a schematic view, showing the run-flat device installed in the tire according to the embodiment of the present invention.

### DETAILED DESCRIPTION OF THE INVENTION

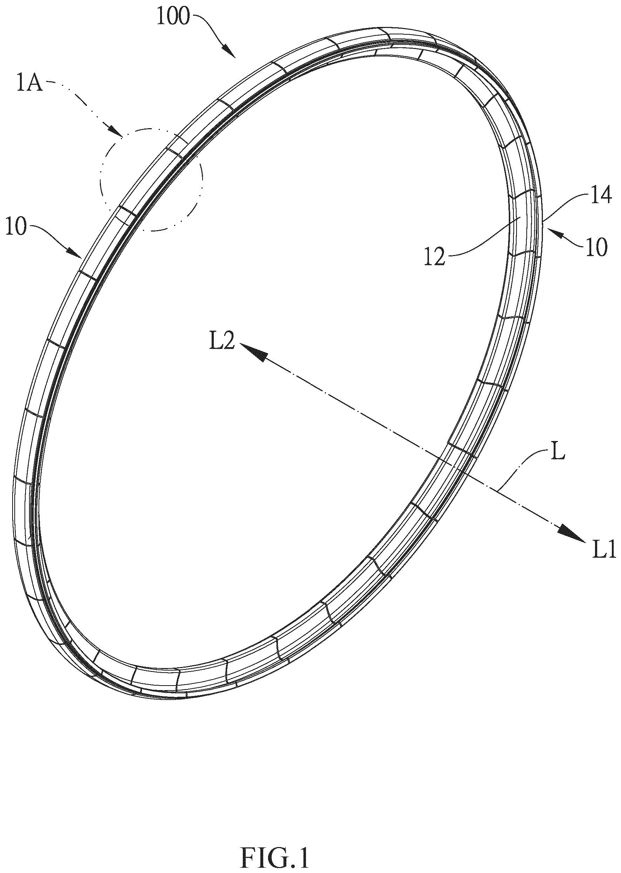

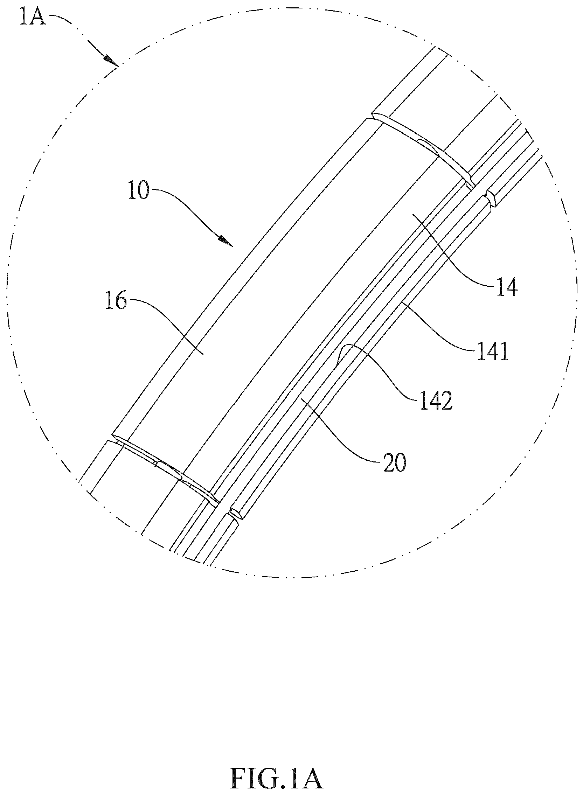

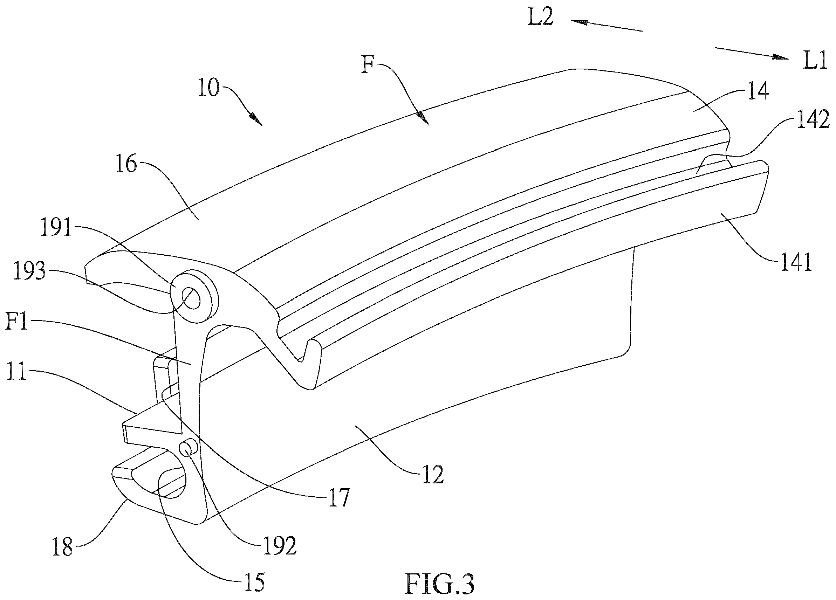

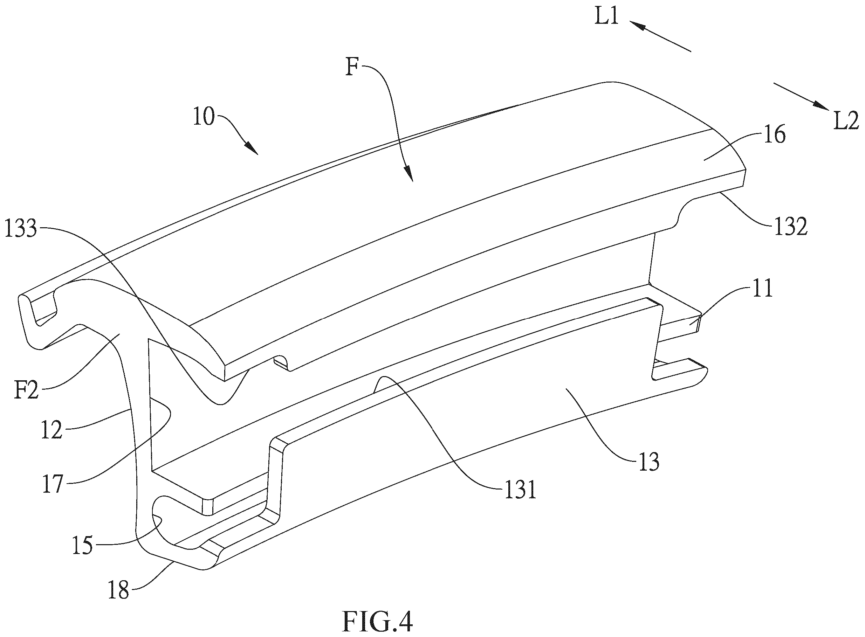

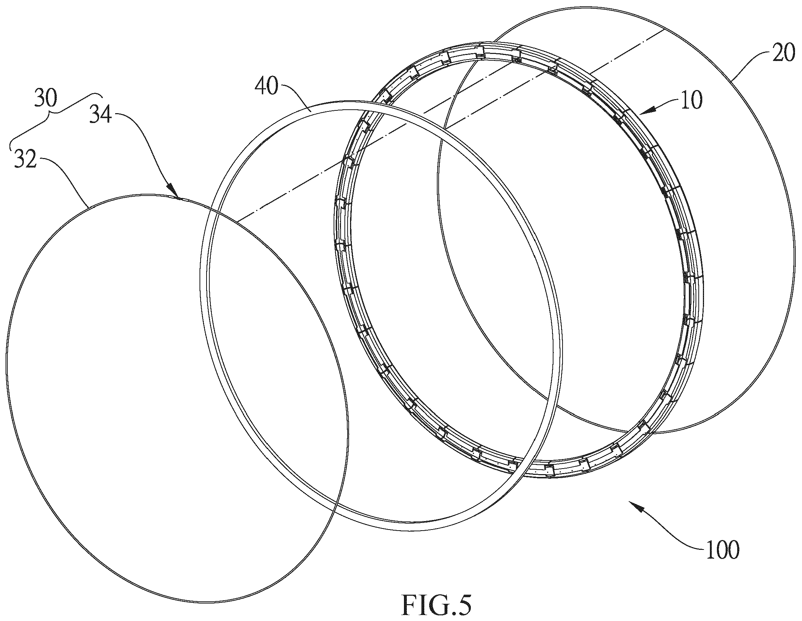

A run-flat device 100 according to an embodiment of the present invention is illustrated in FIG. 1 to FIG. 5. The run-flat device 100 is adapted to be installed in a tire and includes a plurality of support units 10, a retaining ring 20, a steel cable ring 30, and an elastic ring 40, wherein the support units 10 are fixed by the retaining ring 20, the steel cable ring 30, and the elastic ring 40 in an annular arrangement around a rotation axis L. Two opposite directions along the rotation axis L are respectively defined as a first direction L1 and a second direction L2.

The support units 10 include thirty support units 10, wherein each of the support units 10 is made of polyvinyl chloride and is arc-shaped. In other embodiments, the support units 10 include two or two above support units 10 except for thirty support units 10; each of the support units 10 could be made of aluminum alloy, carbon fiber, or glass fiber, etc. Every two of the support units 10 are adjacent. Each of the support units 10 has a main wall 12, wherein each of the main walls 12 is an arc-shaped board. A side of each of the main walls 12 away from the rotation axis L is connected to a hook portion 14. Each of the hook portions 14 extends in the first direction L1 and has a free end 141. Each of the hook portions 14 has a retaining ring groove 142 adjacent to each of the free ends 141. The hook portions 14 of the support units 10 are arranged around the rotation axis L in an annular shape. The retaining ring grooves 142 of the support units 10 are also arranged around the rotation axis L in an annular shape.

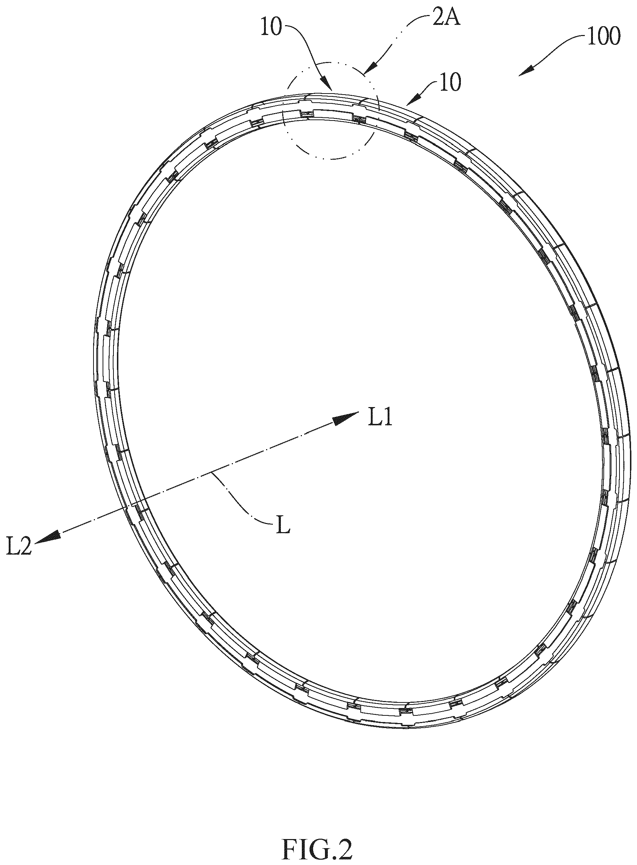

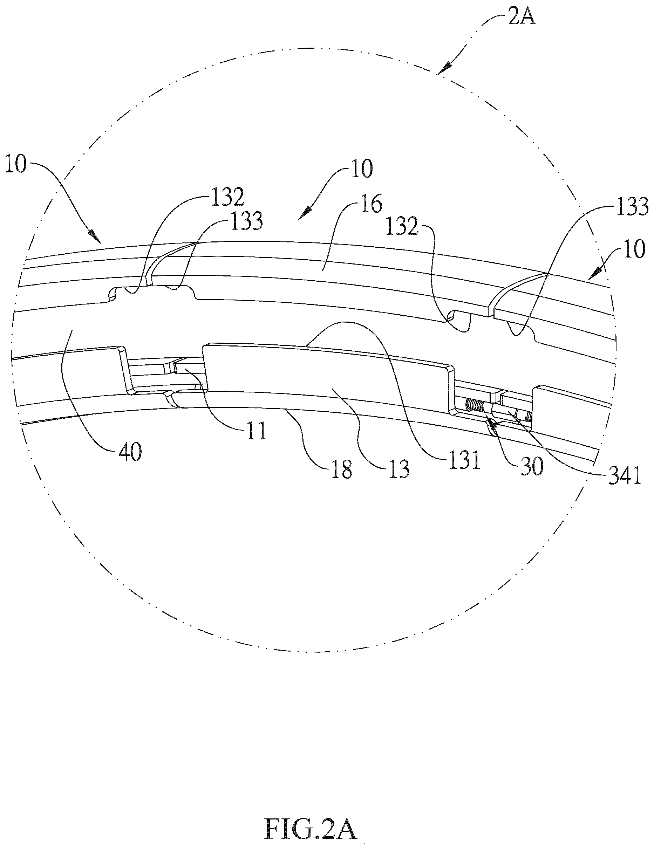

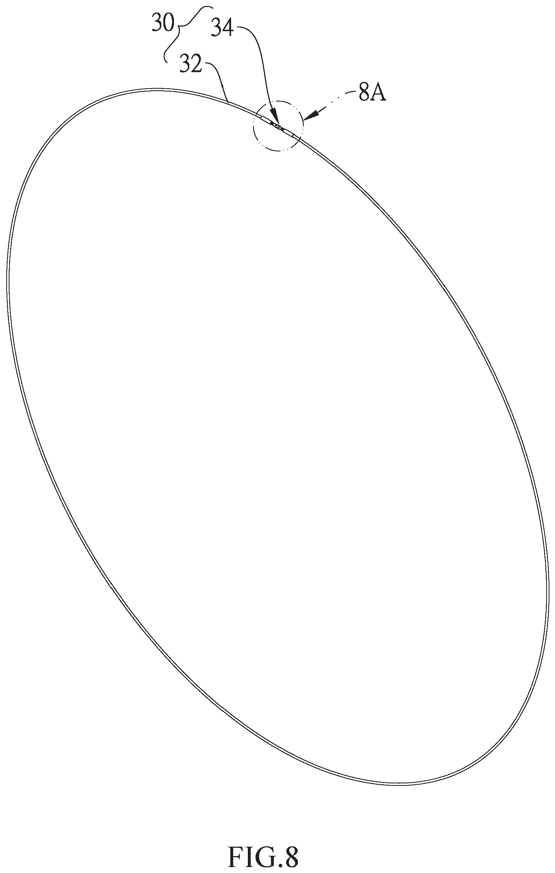

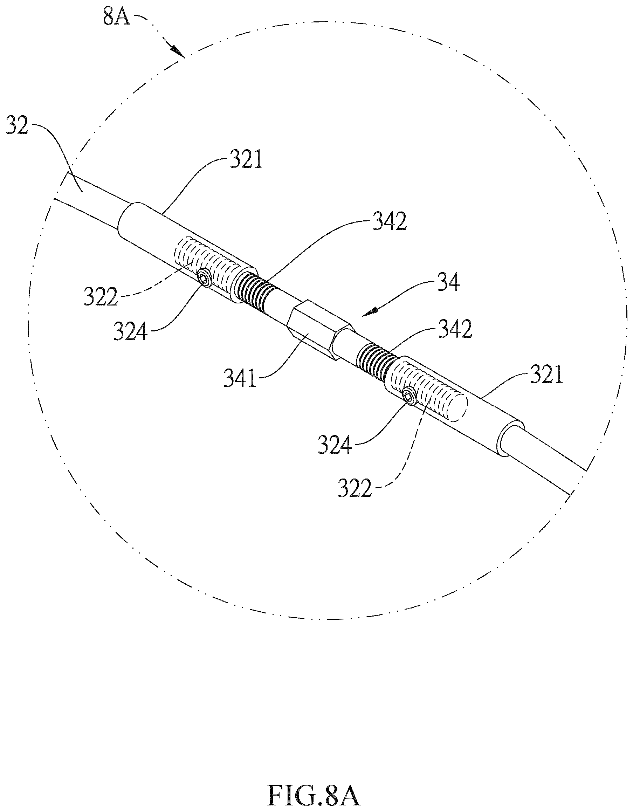

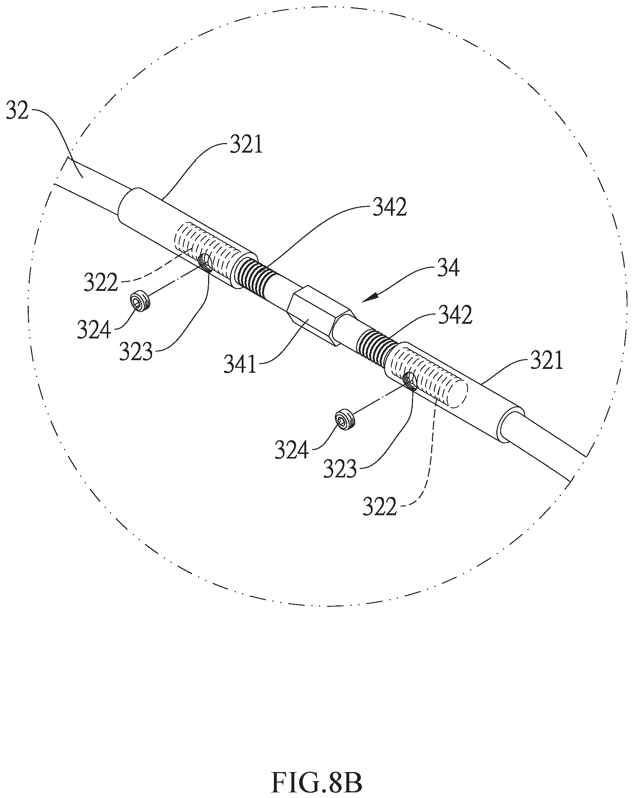

Referring to FIG. 2 to FIG. 4, FIG. 7, and FIG. 8, the side of each of the main walls 12 away from the rotation axis L is connected to an outer wall 16, and a side of each of the main walls 12 adjacent to the rotation axis L is connected to an inner wall 18. Each of the main walls 12 is connected to a middle wall 11 located between each of the outer walls 16 and each of the inner walls 18. The outer walls 16 of the support units 10 are arranged around the rotation axis L in an annular shape. The inner walls 18 of the support units 10 are arranged around the rotation axis L in an annular shape. The middle walls 11 of the support units 10 are arranged around the rotation axis L in an annular shape. Each of the outer walls 16, each of the inner walls 18, and each of the middle walls 11 are boards extending from each of the main walls 12 in the second direction L2. A blocking wall 13 is connected between each of the outer walls 16 and each of the inner walls 18 and is connected to each of the middle walls 11. A steel cable through hole 15 is formed among each of the main walls 12, each of the inner walls 18, each of the middle walls 11, and each of the blocking walls 13. An elastic ring through hole 17 is formed among each of the main walls 12, each of the outer walls 16, each of the middle walls 11, and each of the blocking walls 13.

The steel cable through holes 15 of the support units 10 are arranged around the rotation axis L in an annular shape. The elastic ring through holes 17 of the support units 10 are arranged around the rotation axis L in an annular shape. An inlet 131 is formed on each of the blocking walls 13 corresponding to each of the elastic ring through holes 17. A length of each of the inlets 131 perpendicular to the rotation axis L is less than a length of each of the elastic ring through holes 17 perpendicular to the rotation axis L.

A first enlarged area 132 and a second enlarged area 133 are respectively formed at two enlarged ends of each of the inlets 131 in a rotation direction around the rotation axis L. The first enlarged area 132 of one of every two of the support units 10 adjacent faces the second enlarged area 133 of the other one of every two of the support units 10 adjacent. In the current embodiment, the first enlarged areas 132 communicate with the elastic ring through holes 17 and the steel cable through holes 15; the second enlarged areas 133 communicate with the elastic ring through holes 17 and the steel cable through holes 15.

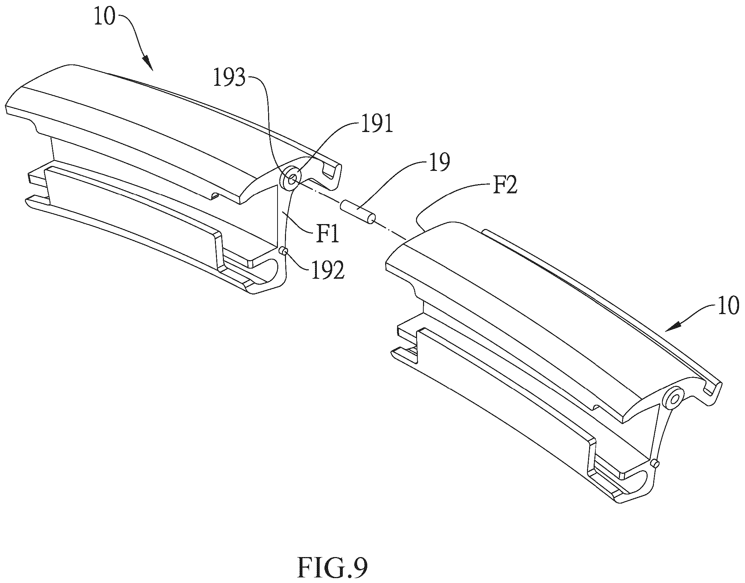

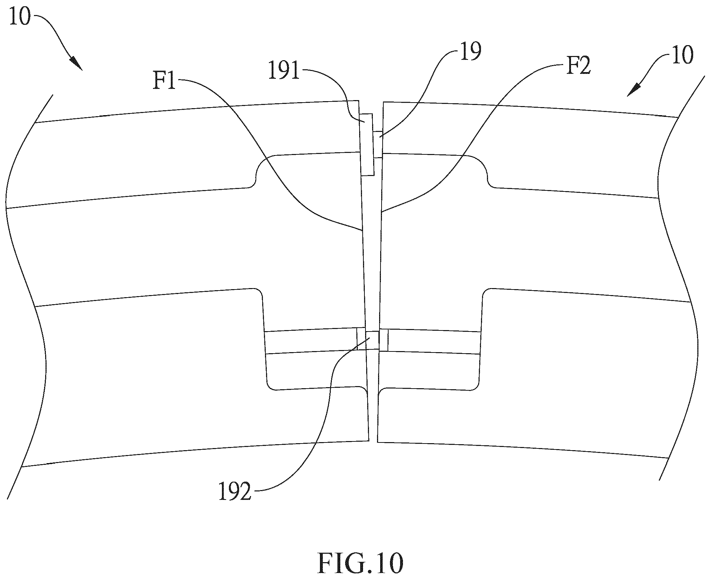

Referring to FIG. 2 to FIG. 4, a support surface F is formed on the main wall 12 of each of the support units 10 and a side of the outer wall 16 of each of the support units 10 away from the rotation axis L. A first end surface F1 and a second end surface F2 are respectively formed at two ends of each of the support units 10 in the rotation direction around the rotation axis L. A first bump 191 and a second bump 192 are respectively formed on a side of each of the first end surfaces F1 away from the rotation axis L and a side of each of the first end surfaces F1 adjacent to the rotation axis L. Each of the first bumps 191 and each of the second bumps 192 extend from each of the first end surfaces F1. More specifically, a diameter of each of the first bumps 191 is greater than a diameter of each of the second bumps 192. Each of the first bumps 191 is located on a part of each of the main walls 12 connected to each of the hook portions 14 and each of the outer walls 16. Each of the second bumps 192 is located on a part of each of the main walls 12 connected to each of the middle walls 11. Each of the first bumps 191 has an inserting hole 193. Referring to FIG. 9 and FIG. 10, at least one adjusting member 19 could be selectively inserted into at least one of the inserting holes 193. A number of the at least one adjusting member 19 corresponds to a number of the inserting holes 193 inserted. The at least one adjusting member 19 is at least one elastomer. When the at least one adjusting member 19 is inserted into at least one of the inserting holes 193, the at least one adjusting member 19 protrudes from at least one of the first bumps 191.

Normally, the first bump 191 and the second bump 192 of one of every two of the support units 10 adjacent are adapted to abut against the second end surface F2 of the other one of every two of the support units 10 adjacent. When a gap formed between two of the support units 10 adjacent is great, the adjusting member 19 could be selectively inserted into the inserting hole 193 of one of the two support units 10. Therefore, through the at least one adjusting member 19 and the second bumps 192 abutting against the second end surfaces F2 of the support units 10, the gap formed between every two of the support units 10 adjacent could be reduced, so that the support units 10 could be tightly arranged.

Referring to FIG. 1 to FIG. 4, the retaining ring 20 is an annular elastomer and tightly fits in the retaining ring grooves 142 of the support units 10. Through a restoring force of the retaining ring, the retaining ring 20 could fix every two of the support units 10 adjacent in an abutted arrangement. In other words, the first bump 191 and the second bump 192 of one of every two of the support units 10 adjacent abut against the second end surface F2 of the other one of every two of the support units 10 adjacent.

Referring to FIG. 2A and FIG. 7 to FIG. 8B, the steel cable ring 30 includes a steel cable 32 and a steel cable adjusting member 34, wherein the steel cable 32 passes through the steel cable through holes 15 of the support units 10. Each of two ends of the steel cable 32 is connected to a sleeve 321. Each of the two sleeves 321 has a screw hole 322. Each of the two screw holes 322 and each of the two sleeves 321 are coaxially disposed. A periphery of each of the two sleeves 321 has a positioning hole 323. Each of the two positioning holes 323 communicates with a side of each of the two screw holes 322. A positioning bolt 324 is screwed into each of the two positioning holes 323. The steel cable adjusting member 34 has a rotary member 341. In the current embodiment, the rotary member 341 is a polygonal prism and two screw rods 342 are respectively formed at two ends of the rotary member 341. A thread direction of one of the two screw rods 342 is opposite to a thread direction of the other screw rod 342. Each of the two screw rods 342 is screwed into the screw hole 322 of each of the two sleeves 321. A side of each of the two screw rods 342 abuts against each of the two positioning bolts 324, so that each of the two positioning bolts 324 fixes each of the two screw rods 342. The rotary member 341 is exposed through one of the first enlarged areas 132 and one of the second enlarged areas 133 facing one of the first enlarged areas 132. Therefore, after the two positioning bolts 324 are loosen by a user, the user could tighten the steel cable 32 or loose the steel cable 32 through rotating the rotary member 341. After the user finishes rotating the steel cable adjusting member 34, the user could screw each of the two positioning bolts 324 again to fix a length of the steel cable ring 30 surrounding the support units 10, thereby preventing a tension of the steel cable 32 from being reduced. When the steel cable adjusting member 34 tightens the steel cable 32, the steel cable 32 abuts against an inner wall of each of the steel cable through holes 15 and fixes every two of the support units 10 adjacent in the abutted arrangement.

Referring to FIG. 2A, FIG. 4, FIG. 5, and FIG. 7, the elastic ring 40 is an elastomer (e.g., rubber, plastic, etc.) which could restore an initial shape after the elastomer is compressed by an external force. The elastic ring 40 passes through the elastic ring through holes 17 of the support units 10 and fits in the elastic ring through holes 17 of the support units 10. The elastic ring 40 could pass through the inlets 131 of the support units 10 after the elastic ring 40 is compressed by the external force to be deformed, so that the elastic ring 40 could pass through the inlets 131 to fit in the elastic ring through holes 17 of the support units 10 or could be moved out of the elastic ring through holes 17 of the support units 10. Therefore, the elastic ring 40 could fix every two of the support units 10 adjacent in the abutted arrangement.

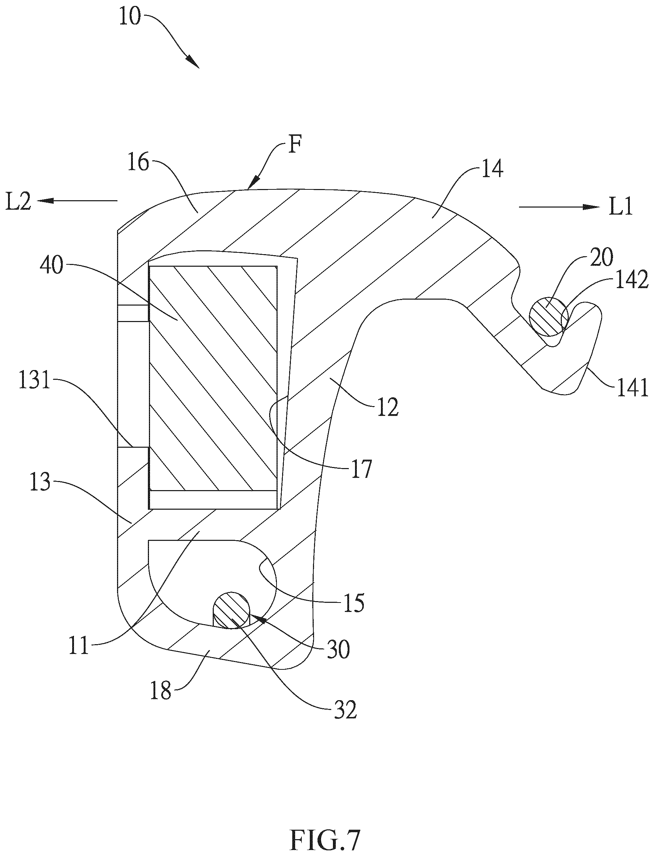

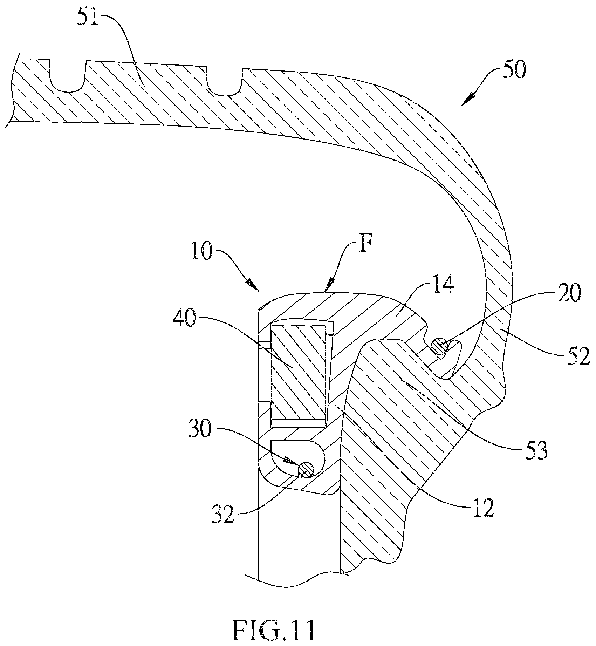

Referring to FIG. 7 and FIG. 11, when the run-flat device 100 of the embodiment is used, the run-flat device 100 is installed in a tire 50. The tire 50 has a tread 51 and a tire sidewall 52 connected to the tread 51. A convex ring 53 is formed on an inner side of the tire sidewall 52 and extends towards the tread 51. When the run-flat device 100 is installed in the tire 50, the hook portions 14 of the support units 10 hook on the convex ring 53 corresponding to the main walls 12. Through the retaining ring 20, the steel cable ring 30, and the elastic ring 40 fixing the support units 10 in the annular arrangement and fixing every two of the support units 10 adjacent in the abutted arrangement, the support units 10 of the run-flat device 100 could maintain the annular arrangement and the support surfaces F of the support units 10 could support the tread 51 of the tire 50 when the tire 50 is flat and the tread 51 is dented inwards and compresses the run-flat device 100. Therefore, because the tire 50 supported by the run-flat device 100 could continue rolling after the tire 50 is damaged and deflated, a vehicle installed with the tire 50 could be avoided being out of control. The vehicle could continue moving to the roadside and stop at the roadside or move to a repair shop in which the tire 50 could be fixed or replaced.

## Claims

1. A run-flat device (100), comprising:
a plurality of support units (10) arranged around a rotation axis (L) in an annular shape, wherein two opposite directions along the rotation axis (L) are respectively defined as a first direction (L1) and a second direction (L2); each of the plurality of support units (10) has a main wall (12), wherein a side of each of the plurality of main walls (12) away from the rotation axis (L) is connected to a hook portion (14); each of the plurality of hook portions (14) extends in the first direction (L1) and has a free end (141); each of the plurality of hook portions (14) has a retaining ring groove (142) adjacent to each of the plurality of free ends (141); the side of each of the plurality of main walls (12) away from the rotation axis (L) is connected to an outer wall (16); a side of each of the plurality of main walls (12) adjacent to the rotation axis (L) is connected to an inner wall (18); each of the plurality of main walls (12) is connected to a middle wall (11) located between the side of each of the plurality of main walls (12) away from the rotation axis (L) and the side of each of the plurality of main walls (12) adjacent to the rotation axis (L); each of the plurality of outer walls (16), each of the plurality of inner walls (18), and each of the plurality of middle walls (11) respectively extend in the second direction (L2); a blocking wall (13) is connected between each of the plurality of outer walls (16) and each of the plurality of inner walls (18); a support surface (F) is formed on each of the plurality of main walls (12) and each of the plurality of outer walls (16); a steel cable through hole (15) is formed among each of the plurality of main walls (12), each of the plurality of inner walls (18), each of the plurality of middle walls (11), and each of the plurality of blocking walls (13); an elastic ring through hole (17) is formed among each of the plurality of main walls (12), each of the plurality of outer walls (16), each of the plurality of middle walls (11), and each of the plurality of blocking walls (13); an inlet (131) is formed on each of the plurality of blocking walls (13) corresponding to each of the plurality of elastic ring through holes (17); a length of each of the plurality of inlets (131) perpendicular to the rotation axis (L) is less than a length of each of the plurality of elastic ring through holes (17) perpendicular to the rotation axis (L);
a retaining ring (20) fixing the plurality of support units (10) around the rotation axis (L) in the annular shape; the retaining ring (20) is an elastomer and tightly fits in the plurality of retaining ring grooves (142) of the plurality of support units (10);
a steel cable ring (30) fixing the plurality of support units (10) around the rotation axis (L) in the annular shape; the steel cable ring (30) passes through the plurality of steel cable through holes (15) of the plurality of support units (10);
an elastic ring (40) fixing the plurality of support units (10) around the rotation axis (L) in the annular shape; the elastic ring (40) passes through the plurality of elastic ring through holes (17) of the plurality of support units (10) and fits in the plurality of elastic ring through holes (17) of the plurality of support units (10); the elastic ring (40) is an elastomer; the elastic ring (40) passes through the plurality of inlets (131) of the plurality of support units (10) after the elastic ring (40) is compressed by an external force to be deformed.

2. The run-flat device (100) as claimed in claim 1, wherein a first enlarged area (132) and a second enlarged area (133) are respectively formed at two enlarged ends of the inlet (131) of each of the plurality of support units (10) in a rotation direction around the rotation axis (L); the first enlarged area (132) of one of every two of the plurality of support units (10) adjacent faces the second enlarged area (133) of the other one of every two of the plurality of support units (10) adjacent.

3. The run-flat device (100) as claimed in claim 2, wherein each of the plurality of first enlarged areas (132) communicates with each of the plurality of steel cable through holes (15) and each of the plurality of elastic ring through holes (17); each of the plurality of second enlarged areas (133) communicates with each of the plurality of steel cable through holes (15) and each of the plurality of elastic ring through holes (17).

4. The run-flat device (100) as claimed in claim 3, wherein the steel cable ring (30) comprises a steel cable (32) and a steel cable adjusting member (34); each of two ends of the steel cable (32) is connected to a sleeve (321), wherein each of the two sleeves (321) has a screw hole (322); the steel cable adjusting member (34) has a rotary member (341); two screw rods (342) are respectively formed at two ends of the rotary member (341); a thread direction of one of the two screw rods (342) is opposite to a thread direction of the other screw rod (342); each of the two screw rods (342) is screwed into the screw hole (322) of each of the two sleeves (321).

5. The run-flat device (100) as claimed in claim 4, wherein the rotary member (341) is a polygonal prism; the rotary member (341) is exposed through one of the plurality of first enlarged areas (132) and one of the plurality of second enlarged areas (133) facing one of the plurality of first enlarged areas (132).

6. The run-flat device (100) as claimed in claim 4, wherein a periphery of each of the two sleeves (321) has a positioning hole (323); each of the two positioning holes (323) communicates with a side of each of the two screw holes (322); a positioning bolt (324) is screwed into each of the two positioning holes (323); each of the two positioning bolts (324) abuts against a side of each of the two screw rods (342).

7. The run-flat device (100) as claimed in claim 1, wherein a first end surface (F1) and a second end surface (F2) are respectively formed at two ends of each of the plurality of support units (10) in a rotation direction around the rotation axis (L); a first bump (191) and a second bump (192) are respectively formed on a side of each of the plurality of first end surfaces (F1) away from the rotation axis (L) and a side of each of the plurality of first end surfaces (F1) adjacent to the rotation axis (L); the first bump (191) and the second bump (192) of one of every two of the plurality of support units (10) adjacent are adapted to abut against the second end surface (F2) of the other one of every two of the plurality of support units (10) adjacent.

8. The run-flat device (100) as claimed in claim 7, wherein the first bump (191) of each of the plurality of support units (10) has an inserting hole (193); at least one adjusting member (19) is inserted into at least one of the plurality of inserting holes (193); a number of the at least one adjusting member (19) corresponds to a number of the plurality of inserting holes (193) inserted; the at least one adjusting member (19) protrudes from at least one of the plurality of first bumps (191); the at least one adjusting member (19) is adapted to abut against the second end surface (F2) of at least one of the plurality of support units (10).

9. The run-flat device (100) as claimed in claim 8, wherein a diameter of the first bump (191) of each of the plurality of support units (10) is greater than a diameter of the second bump (192) of each of the plurality of support units (10); each of the plurality of first bumps (191) is located on a part of each of the plurality of main walls (12) connected to each of the plurality of hook portions (14) and each of the plurality of outer walls (16).

10. The run-flat device (100) as claimed in claim 8, wherein the second bump (192) of each of the plurality of support units (10) is located on a part of each of the plurality of main walls (12) connected to each of the plurality of middle walls (11).
